# EUROPÄISCHE PATENTSCHRIFT

(11) **EP 3 750 775 B1**
(45) Veröffentlichungstag und Bekanntmachung des Hinweises auf die Patenterteilung: **28.12.2022**
(21) Anmeldenummer: 20178355.2
(22) Anmeldetag: 04.06.2020
(51) Int. Cl.: B61L 15/00, B61F 5/50, B61L 25/02, G01C 9/00, B61F 5/22, B61F 5/24, B61D 45/00, B60G 17/019, B60G 17/0185, B60G 99/00

(54) **VERFAHREN UND VORRICHTUNG ZUR BETRIEBLICHEN NEIGUNGSBESTIMMUNG BEI FAHRZEUGEN**
METHOD AND DEVICE FOR DETERMINING THE OPERATING TILT OF VEHICLES
PROCÉDÉ ET DISPOSITIF DE DÉTERMINATION D'UNE INCLINAISON DE FONCTIONNEMENT DANS DES VÉHICULES

(30) Priorität: 13.06.2019 AT 505292019
(43) Veröffentlichungstag der Anmeldung: 16.12.2020
(73) Patentinhaber: Siemens Mobility Austria GmbH, 1210 Wien (AT)
(72) Erfinder: Girstmair, Bernhard Lukas, 8010 Graz (AT)
(74) Vertreter: Deffner, Rolf

(56) Entgegenhaltungen:
- WO-A1-96/02027
- DE-T2- 69 529 474
- DE-T2- 69 707 148
- JP-A- 2002 005 657

## Beschreibung

Die Erfindung bezieht sich auf ein Verfahren und eine Vorrichtung zur betrieblichen Neigungsbestimmung bei Fahrzeugen, insbesondere bei Schienenfahrzeugen mit zumindest einem Fahrwerk sowie mit zumindest einem Wagenkasten.

Fahrzeuge, insbesondere Schienenfahrzeuge müssen eine hohe Fahrsicherheit aufweisen. Um bei Schienenfahrzeugen in Bogenfahrten starke Wankbewegungen, d.h. Drehbewegungen bzw. Neigungen um eine Längsachse des Schienenfahrzeugs zu vermeiden und um Vorschriften für Einschränkungsberechnungen zu erfüllen, werden häufig Wanksysteme, auch Anti-Wanksysteme oder Wankkompensationssysteme genannt, eingesetzt. Wanksysteme umfassen beispielsweise Wankstützen, auch Wankstabilisatoren genannt, die häufig Torsionsstäbe in Fahrzeugquerrichtung sowie Hebeln und Zug-Druck-Stangen aufweisen, und sind zwischen einem Wagenkasten und einem Fahrwerk gelagert. Ein Einsatz von Wankstützen reduziert einseitige Federungsvorgänge bzw. führt dazu, dass Federungsvorgänge auf jeder Fahrzeugseite annähernd gleichmäßig, d.h. parallel ausgeführt werden.

Beispielsweise zeigen das US 8,899,160 B2 und die WO 2014/009142 A1 Wanksysteme bzw. Wankstützen für Schienenfahrzeuge.

Wanksysteme unterliegen einem Verschleiß und können Schäden aufweisen, wodurch deren Funktionsfähigkeit eingeschränkt werden kann. Eine rasche Erkennung bzw. Detektion eines Schadens ist beispielsweise aus Gründen einer effektiven sowie effizienten Wartung und Instandhaltung wichtig. Zur Schadensdetektion bei Wanksystemen werden häufig Sichtinspektionen während geplanter Instandhaltungsvorgänge des Fahrzeugs oder auch Sensoren und entsprechende Datenverarbeitungs-, Auswertungs- sowie Anzeigeeinrichtungen eingesetzt.

Beispielsweise zeigt die DE 10 2013 223 424 A1 ein Verfahren für den Betrieb eines Kraftfahrzeugs zur Erkennung einer Überbeanspruchung eines Wankstabilisators. Der Wankstabilisator ist verdrehbar mit einer Fahrzeugkarosserie verbunden und weist einen Drehantrieb auf. Eine Überbeanspruchung wird anhand eines Verhältnisses aus einem Torsionswinkel und einer zu einem von dem Drehantrieb aufgebrachten Drehmoment äquivalenten Größe detektiert. Weiterhin beschreibt die Europäische Norm (EN) 14363 ein Verfahren zur Bestimmung eines Wankverhaltens von Schienenfahrzeugen. Ein Neigungskoeffizient, welcher dieses Wankverhalten charakterisiert, wird darin aus einem linearen mathematischen Zusammenhang mit einer in einem Wagenkastenschwerpunkt auftretenden Wagenkasten-Querbeschleunigung und einer in einer Radsatzlängsachse auftretenden Radsatz-Querbeschleunigung bestimmt. Für eine Erfassung der Wagenkasten-Querbeschleunigung und der Radsatz-Querbeschleunigung werden Beschleunigungssensoren eingesetzt. Die DE 697 07 148 T2 zeigt ein System zur Erkennung von Bedingungen, die zu einem Überrollen eines Fahrzeugs führen. Mittels Sensoren werden Seitenbeschleunigungen und Lastverlagerungen des Fahrzeugs erfasst. Es werden Rollmomente und Fahrzeugschwerpunkte ermittelt. Mittels einer Anzeige werden Wahrscheinlichkeiten des Überrollens ausgegeben.

Der Erfindung liegt daher die Aufgabe zugrunde, ein gegenüber dem Stand der Technik weiterentwickeltes Verfahren mit hoher Präzision und Verfügbarkeit anzugeben.

Erfindungsgemäß wird diese Aufgabe gelöst mit einem Verfahren nach Anspruch 1 und einer Vorrichtung nach Anspruch 13.

Durch Ermittlung des Winkelkoeffizienten bzw. eines Neigungskoeffizienten, welcher eine Neigung des Wagenkastens um eine Längsachse des Fahrzeugs, d.h. eine Querneigung, angibt, aus einer ersten Querbeschleunigung des Fahrwerksrahmens und einer zweiten Querbeschleunigung des Wagenkastens, können Schäden des Wanksystems und/oder einer Sekundärfederung mit hoher Genauigkeit detektiert werden. Durch diese hohe Genauigkeit sowie die kontinuierliche Bestimmung des Neigungskoeffizienten wird ein sich allmählich verschlechternder Zustand des Wanksystems und/oder der Sekundärfederung erkannt und es kann ein Zeitpunkt eines Ausfalls oder eines Erreichens von Verschleiß-Grenzmaßen des Wanksystems und/oder der Sekundärfederung prognostiziert werden. Dadurch werden eine zustandsorientierte Wartung und Instandhaltung ermöglicht. Intervalle für Sichtinspektionen können vergrößert bzw. es kann auf Sichtkontrollen verzichtet werden.

Weiterhin kann als erste Beschleunigung beispielsweise auch eine erste Längsbeschleunigung des Fahrwerksrahmens und als zweite Beschleunigung eine zweite Längsbeschleunigung des Wagenkastens eingesetzt und daraus ein Nickkoeffizient, welcher eine Neigung des Wagenkastens um eine Querachse des Fahrzeugs angibt, berechnet werden. Durch Vergleich des Nickkoeffizienten mit einem nominalen Nickkoeffizienten können ebenfalls Schäden an der Sekundärfederung detektiert werden.

Eine vorteilhafte Lösung wird erzielt, wenn in die Ermittlung des Winkelkoeffizienten zumindest eine Zuladung des Fahrzeugs eingesetzt wird.

Durch diese Maßnahme wird die Genauigkeit bei der Bestimmung des Winkelkoeffizienten weiter verbessert, da die Zuladung die Neigung des Fahrzeugs (z.B. die Querneigung) beeinflusst. Es ist günstig, wenn der Winkelkoeffizient mittels einer Ausgleichungsrechnung zumindest bezüglich der ersten Beschleunigung sowie der zweiten Beschleunigung bestimmt wird.

Dadurch wird eine hohe Flexibilität in Bezug auf die Fahrzeuge und ihre Einsatzspektren, für die das Verfahren auszulegen ist, erzielt. Ein zunächst unbekannter, mehrdimensionaler Zusammenhang zwischen der ersten Beschleunigung und der zweiten Beschleunigung wird mittels der Ausgleichungsrechnung auf eine beispielsweise lineare Funktion zurückgeführt. Dadurch wird eine einfache, schnelle, robuste und zugleich genaue Berechnung des Winkelkoeffizienten bewirkt.

Eine vorteilhafte Ausgestaltung erhält man, wenn erfasste Signale der ersten Beschleunigung und der zweiten Beschleunigung mittels eines Tiefpasses gefiltert werden. Durch diese Maßnahme werden hochfrequente Signalanteile, wie sie beispielsweise durch Schwingungen hervorgerufen werden, abgeschwächt und eine Störungsempfindlichkeit bei der Detektion von Schäden des Wanksystems wird gesenkt.

Erfindungsgemäß werden dann Daten zumindest bezüglich der ersten Beschleunigung und der zweiten Beschleunigung dann aufgezeichnet, wenn die erste Beschleunigung einen definierten Beschleunigungs-Schwellwert überschreitet.

Durch diese Maßnahme wird eine zielgerichtete und somit speicherbedarfsreduzierende Datenspeicherung erzielt. Auf eine Speicherung von Daten, welche für eine Auswertung uninteressante Betriebszustände (z.B. Fahrten auf Geraden) beschreiben oder für die ein Schaden des Wanksystems etc. ausgeschlossen werden kann, kann verzichtet werden.

Erfindungsgemäß werden die aufgezeichneten Daten in Abhängigkeit von Auftrittsorten und Auftrittszeitpunkten zumindest der ersten Beschleunigung und der zweiten Beschleunigung zumindest einem ersten Abschnitt, wobei für diesen zumindest ersten Abschnitt zumindest ein erster Mittelwert der ersten Beschleunigung und ein zweiter Mittelwert der zweiten Beschleunigung gebildet werden, zugeordnet.

Durch diese Maßnahme wird eine einfache und rasche Zuordnung der Daten bzw. von Schadensereignissen zu Orten und Zeitpunkten erzielt. Auswertung, Rückverfolgbarkeit und Reproduzierbarkeit von Schadensereignissen werden dadurch erleichtert.

Eine vorteilhafte Lösung erhält man, wenn zumindest der erste Mittelwert und der zweite Mittelwert in einer Datenbank gespeichert werden.

Durch diese Maßnahme werden auf Grundlage von Datenbankeinträgen, welche eine Historie von Schadenszuständen und Verschleißzuständen des Wanksystems und/oder der Sekundärfederung etc. beschreiben, Prognosen im Hinblick auf zukünftige Zustände ermöglicht. Ein sich allmählich verschlechternder Zustand des Wanksystems und/oder der Sekundärfederung etc. kann erkannt und ein Zeitpunkt für eine erforderliche Reparatur bestimmt werden.

Weiterhin ist es günstig, wenn eine Erfassung der ersten Beschleunigung und der zweiten Beschleunigung, eine Ermittlung des Winkelkoeffizienten sowie ein Vergleich des ermittelten Winkelkoeffizienten mit dem nominalen Winkelkoeffizienten in oder an einem Fahrzeug durchgeführt wird.

Durch diese Maßnahme wird eine betriebliche Detektion von Fehlern, Störungen oder Schäden ermöglicht.

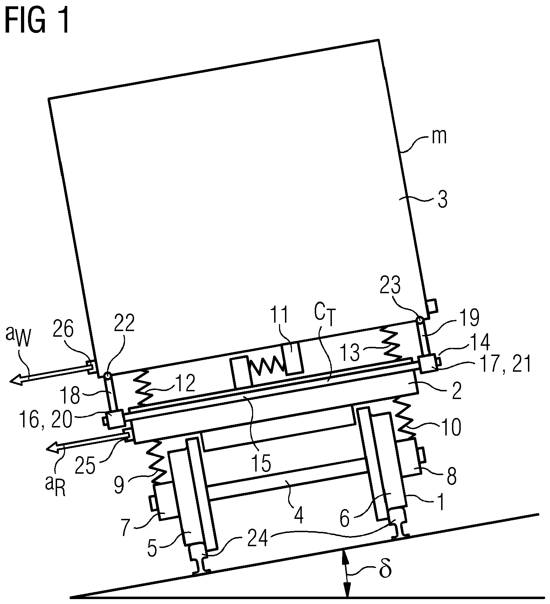

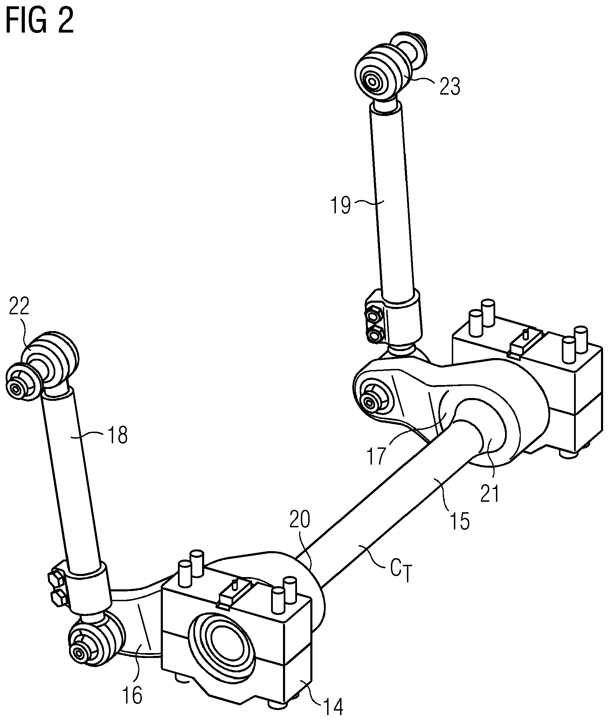

Nachfolgend wird die Erfindung anhand von Ausführungsbeispielen näher erläutert. Die Fig. 1 und 2 dienen zur Veranschaulichung eines möglichen Anwendungsgebiets der Erfindung

Es zeigen beispielhaft:
- Fig. 1:: Eine Vorderansicht einer beispielhaften Ausführung eines Schienenfahrzeugs mit einem Fahrwerk und einem Wagenkasten, wobei ein Wanksystem mit einer Wankstütze vorgesehen ist,
- Fig. 2:: Ein Schrägriss einer beispielhaften Ausführung einer Wankstütze, und
- Fig. 3:: Ein Flussdiagramm zu einer beispielhaften Variante eines erfindungsgemäßen Verfahrens.

Ein in Fig. 1 dargestellter Schnitt durch ein in Vorderansicht gezeigtes, beispielhaftes Schienenfahrzeug umfasst einen Wagenkasten 3 und ein Fahrwerk 1. Das Fahrwerk 1 weist einen Fahrwerksrahmen 2 sowie einen Radsatz 4 mit einem ersten Rad 5 und einem ersten Radsatzlager 7 sowie mit einem zweiten Rad 6 und einem zweiten Radsatzlager 8 auf. Über das erste Radsatzlager 7 und eine erste Primärfeder 9 sowie über das zweite Radsatzlager 8 und eine zweite Primärfeder 10 ist der Radsatz 4 an den Fahrwerksrahmen 2 gekoppelt.

Der Fahrwerksrahmen 2 ist über eine erste Sekundärfeder 12 und eine zweite Sekundärfeder 13, welche eine Sekundärfederung des Schienenfahrzeugs bilden, über eine Längsmitnahme 11 mit einer Querfeder sowie über ein Wanksystem mit einer Wankstütze 14 mit dem Wagenkasten 3 verbunden.

Die Wankstütze 14 umfasst eine in Querrichtung des Schienenfahrzeugs angeordnete Torsionswelle 15, welche eine Steifigkeit c_{T} aufweist. Bei der Steifigkeit c_{T} handelt es sich um eine Torsionssteifigkeit. Die Torsionswelle 15 ist mit einem ersten Hebel 16 und einem zweiten Hebel 17 verbunden.

Der erste Hebel 16 ist über ein erstes Drehgelenk 20 mit einer ersten Zug-Druck-Stange 18 verbunden, zwischen dem zweiten Hebel 17 und einer zweiten Zug-Druck-Stange 19 ist ein zweites Drehgelenk 21 vorgesehen.

Oberseiten der ersten Zug-Druck-Stange 18 und der zweiten Zug-Druck-Stange 19 sind gelenkig an eine Unterseite des Wagenkastens 3 gekoppelt. Zwischen der ersten Zug-Druck-Stange 18 und dem Wagenkasten 3 ist ein drittes Drehgelenk 22 angeordnet, zwischen der zweiten Zug-Druck-Stange 19 und dem Wagenkasten 3 ist ein viertes Drehgelenk 23 vorgesehen.

Das Wanksystem ist aus dem Stand der Technik bekannt. Es begrenzt Wankbewegungen bzw. Drehbewegungen des Wagenkastens 3 um eine Längsachse des Schienenfahrzeugs (bzw. Querneigungen) aufgrund der Steifigkeit c_{T} der Torsionswelle 15, welche einen Widerstand gegen Verdrehungen der Torsionswelle 15 um deren Längsachse bewirkt. Nickbewegungen, d.h. Drehbewegungen um eine Querachse des Schienenfahrzeugs, sowie gleichmäßige Federungsvorgänge des Wagenkastens 3 relativ zu dem Fahrwerk 1 ohne Verdrehungen um die Längsachse des Schienenfahrzeugs werden durch das Wanksystem nicht behindert.

Das Schienenfahrzeug stützt sich über das erste Rad 5 und das zweite Rad 6 auf einem bogenförmigen und überhöhten Gleis 24 ab. Das Gleis 24 weist einen Querneigungswinkel δ bezüglich einer Horizontalebene auf. Der Fahrwerksrahmen 2 weist eine erste Beschleunigung bzw. eine erste Querbeschleunigung a_{R} auf, der Wagenkasten 3 eine zweite Beschleunigung bzw. eine zweite Querbeschleunigung a_{W}.

Werte der ersten Querbeschleunigung a_{R} werden kontinuierlich mittels eines ersten Beschleunigungssensors 25 auf dem Fahrwerksrahmen 2 gemessen, Werte der zweiten Querbeschleunigung a_{W} kontinuierlich mittels eines zweiten Beschleunigungssensors 26 an dem Wagenkasten 3. Eine Erfassung von Werten der ersten Querbeschleunigung a_{R} und der zweiten Querbeschleunigung a_{W} wird demnach an dem Schienenfahrzeug durchgeführt.

Der erste Beschleunigungssensor 25 und der zweite Beschleunigungssensor 26 sind als aus dem Stand der Technik bekannte piezoelektrische Sensoren ausgeführt.

Das Schienenfahrzeug weist einen nicht dargestellten, aus dem Stand der Technik bekannten Lastsensor auf, der aus Ein- und Ausfederungsvorgängen der ersten Sekundärfeder 12 und der zweiten Sekundärfeder 13 Druckluftsignale erzeugt, aus denen Beladungszustände bzw. eine Zuladung m des Schienenfahrzeugs abgeleitet werden.

Ein Schaden des Wanksystems wird aus einer Ermittlung eines Winkelkoeffizienten bzw. Neigungskoeffizienten s detektiert. Der Neigungskoeffizient s charakterisiert die Querneigung des Wagenkastens 3 bezüglich des Fahrwerksrahmens 2.

Messsignale bezüglich der ersten Querbeschleunigung a_{R} sowie der zweiten Querbeschleunigung a_{W} werden über nicht dargestellte Datenleitungen an eine ebenfalls nicht dargestellte, auf dem Fahrwerk 1 angeordnete Recheneinheit übermittelt. Erfindungsgemäß ist es auch vorstellbar, dass die Messsignale über eine Funkverbindung an die Recheneinheit übertragen werden.

Weiterhin ist es auch denkbar, dass die Recheneinheit in dem Wagenkasten 3 vorgesehen ist.

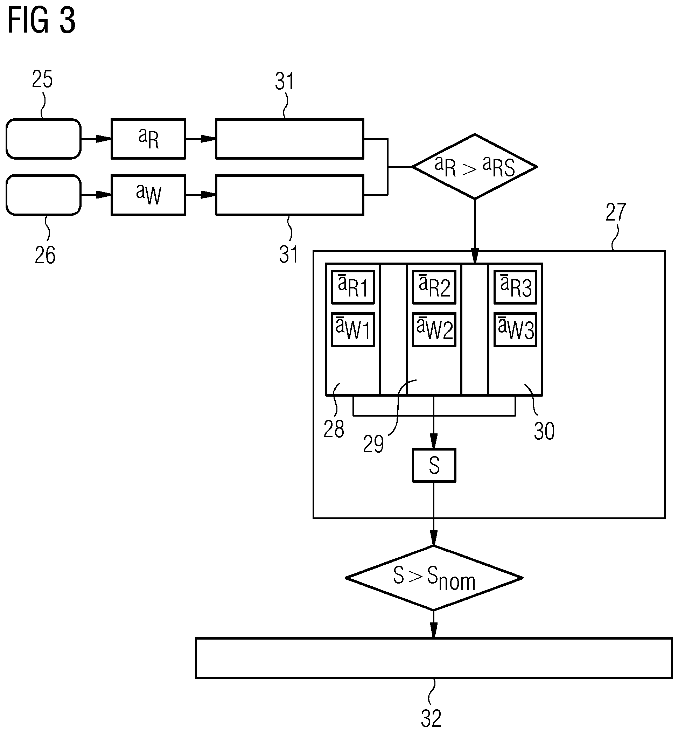

In der Recheneinheit, d.h. in dem Schienenfahrzeug, wird kontinuierlich, während des Betriebs des Schienenfahrzeugs eine im Zusammenhang mit Fig. 3 beschriebene Ausgleichungsrechnung, in welche die erste Querbeschleunigung a_{R} sowie die zweite Querbeschleunigung a_{W} eingesetzt werden, durchgeführt und daraus kontinuierlich Werte für den Neigungskoeffizienten s bestimmt.

Ebenfalls kontinuierlich wird in der Recheneinheit, d.h. in dem Schienenfahrzeug, ein Vergleich zwischen dem berechneten Neigungskoeffizienten s und einem nominalen Winkelkoeffizienten bzw. einem nominalen Neigungskoeffizienten sₙₒₘ, der aus Konstruktions- und Berechnungsunterlagen zu dem Schienenfahrzeug vordefiniert und in der Recheneinheit gespeichert ist, durchgeführt. Auf Grundlage dieses Vergleichs wird ein Schaden des Wanksystems detektiert. Daten zur Auslösung eines Warnhinweises werden an einen Wartungsstand übermittelt, um eine zustandsorientierte Wartung und Instandhaltung zu ermöglichen.

Erfindungsgemäß ist es auch möglich, dass mittels einer Anzeige eines Warnhinweises auf einem nicht dargestellten Anzeigegerät ein entsprechendes Warnereignis in einem Führerstand des Schienenfahrzeugs ausgelöst wird, das eine erforderliche Reparatur des Wanksystems anzeigt (Warnereignis-Auslösung 32, siehe Fig. 3). Für eine entsprechende Übertragung von Daten von der Recheneinheit in das Anzeigegerät sind nicht dargestellte Datenleitungen vorgesehen.

Erfindungsgemäß ist es weiterhin vorstellbar, dass kein Wanksystem auf dem Schienenfahrzeug vorgesehen ist und auf Grundlage der ersten Querbeschleunigung a_{R}, der zweiten Querbeschleunigung a_{W} sowie des Neigungskoeffizenten s und des nominalen Neigungskoeffizienten sₙₒₘ ein Schaden an der Sekundärfederung detektiert wird.

Darüber hinaus ist es auch denkbar, dass als erste Beschleunigung eine erste Längsbeschleunigung des Fahrwerksrahmens 2 und als zweite Beschleunigung eine zweite Längsbeschleunigung des Wagenkastens 3 eingesetzt wird und daraus ein Nickkoeffizient, welcher eine Neigung des Wagenkastens 3 um eine Querachse des Fahrzeugs charakterisiert, berechnet wird. Durch Vergleich des Nickkoeffizienten mit einem nominalen Nickkoeffizienten werden Schäden an der Sekundärfederung detektiert.

Fig. 2 zeigt einen Schrägriss einer Wankstütze 14 für ein Wanksystem, das in Fig. 1 in einem in ein Schienenfahrzeug eingebauten Zustand dargestellt ist.

Die Wankstütze 14 weist eine Torsionswelle 15 mit einer Steifigkeit c_{T} auf. Die Torsionswelle 15 ist in einem in Fig. 1 gezeigten Fahrwerksrahmen 2 eingespannt und mit einem ersten Hebel 16 und einem zweiten Hebel 17 verbunden. Der erste Hebel 16 ist über ein erstes Drehgelenk 20 an eine erste Zug-Druck-Stange 18 gekoppelt. Die erste Zug-Druck-Stange 18 ist über ein drittes Drehgelenk 22 mit einem in Fig. 1 offenbarten Wagenkasten 3 verbunden.

Der zweite Hebel 17 ist über ein zweites Drehgelenk 21 an eine zweite Zug-Druck-Stange 19 gekoppelt. Die zweite Zug-Druck-Stange 19 ist über ein viertes Drehgelenk 23 mit einem in Fig. 1 offenbarten Wagenkasten 3 verbunden. Querneigungen des Wagenkastens 3, d.h. Neigungen bzw. Verdrehungen des Wagenkastens 3 um eine Längsachse des Schienenfahrzeugs, werden mittels der Wankstütze 14 reduziert. Die Steifigkeit c_{T} der Torsionswelle 15 bewirkt einen Widerstand gegen Verdrehungen des Wagenkastens 3 relativ zu dem Fahrwerksrahmen 2.

Aufgrund eines Schadens oder eines starken Verschleißes der Wankstütze 14 nimmt der Widerstand gegen Verdrehungen des Wagenkastens 3 um die Längsachse des Schienenfahrzeugs ab und die Querneigung des Wagenkastens 3 wird verstärkt. Auf Grundlage eines Winkelkoeffizienten bzw. eines Neigungskoeffizienten s, welcher die Querneigung des Wagenkastens 3 beschreibt, wird mittels einer im Zusammenhang mit Fig. 3 beschriebenen Ausgleichungsrechnung der Schaden oder der starke Verschleiß der Wankstütze 14 bzw. des Wanksystems erkannt.

In Fig. 3 ist ein Flussdiagramm dargestellt, das eine beispielhafte Variante eines erfindungsgemäßen Verfahrens zur Detektion von Schäden, Fehlern, übermäßigem Verschleiß etc. an einem beispielsweise in Fig. 1 und Fig. 2 gezeigten Wanksystem eines Schienenfahrzeugs mit einem in Fig. 1 dargestellten Fahrwerk 1 beschreibt.

Messungen, Berechnungen, Datenübertragung und gegebenenfalls Ausgabe von Warnereignissen werden mit einer Frequenz von größer oder gleich 20 Hz während eines Betriebs des Schienenfahrzeugs kontinuierlich ausgeführt bzw. aktualisiert. Die Berechnungen werden auf einer nicht dargestellten, in dem Fahrwerk 1 angeordneten Recheneinheit ausgeführt.

Es wird dabei eine erste Beschleunigung bzw. eine erste Querbeschleunigung a_{R} eines in Fig. 1 gezeigten Fahrwerksrahmens 2 mittels eines ersten Beschleunigungssensors 25, der ebenfalls in Fig. 1 dargestellt ist, gemessen.

Weiterhin wird mittels eines in Fig. 1 gezeigten zweiten Beschleunigungssensors 26 eine zweite Beschleunigung bzw. eine zweite Querbeschleunigung a_{W} eines ebenfalls in Fig. 1 dargestellten Wagenkastens 3 gemessen.

Signale der ersten Querbeschleunigung a_{R} und Signale der zweiten Querbeschleunigung a_{W} werden tiefpassgefiltert (Tiefpassfilterung 31), d.h. es werden Signalanteile über einer definierten Grenzfrequenz stark abgeschwächt, während Signalanteile unterhalb dieser Grenzfrequenz passieren. Dadurch werden aus der ersten Querbeschleunigung a_{R} und der zweiten Querbeschleunigung a_{W} quasistatische Beschleunigungssignale erzeugt und es wird vermieden, dass dynamische Ereignisse, wie z.B. Schwingungen des in Fig. 1 gezeigten Fahrwerksrahmens 2, das Verfahren störend beeinflussen und Rechenergebnisse verfälschen.

Überschreitet die gefilterte erste Querbeschleunigung a_{R} einen Beschleunigungs-Schwellwert bzw. Querbeschleunigungs-Schwellwert a_{RS} von 0,1 m/s², so werden die erste Querbeschleunigung a_{R} sowie die zweite Querbeschleunigung a_{W} aufgezeichnet und in einer Datenbank 27 gespeichert. Unterschreitet die gefilterte erste Querbeschleunigung a_{R} den Querbeschleunigungs-Schwellwert a_{RS} von 0,1 m/s², so werden Signale der ersten Querbeschleunigung a_{R} sowie der zweiten Querbeschleunigung a_{W} verworfen, d.h. nicht aufgezeichnet und nicht weiter verarbeitet. Dadurch werden für das Verfahren nicht relevante Signale, d.h. nicht auf einen Schaden des Wanksystems hinweisende Signale, ignoriert und es wird Speicherbedarf in der Datenbank 27 reduziert. Erfindungsgemäß ist auch ein kleinerer oder größerer Querbeschleunigungs-Schwellwert a_{RS} als 0,1 m/s² vorstellbar.

In der Datenbank 27 gespeicherte Daten werden hinsichtlich Auftrittszeitpunkten und Auftrittsorten der ersten Querbeschleunigung a_{R} und der zweiten Querbeschleunigung a_{W} in Abschnitte unterteilt. Beispielsweise beschreibt ein erster Abschnitt 28 zeitlich und örtlich eine Fahrt des Schienenfahrzeugs durch einen Linksbogen und ein zweiter Abschnitt 29 einen darauffolgenden Rechtsbogen etc.

In dem Flussdiagramm von Fig. 3 sind der erste Abschnitt 28, der zweite Abschnitt 29 und ein dritter Abschnitt 30 dargestellt. Erfindungsgemäß ist es auch vorstellbar, weitere Abschnitte vorzusehen.

Für jeden Abschnitt werden Mittelwerte der ersten Querbeschleunigung a_{R} sowie der zweiten Querbeschleunigung a_{W} gebildet:
Für den ersten Abschnitt 28 werden ein erster Mittelwert bzw. ein erster Querbeschleunigungsmittelwert a̅_{R1} und ein zweiter Mittelwert bzw. ein zweiter Querbeschleunigungsmittelwert a̅_{W1}, für den zweiten Abschnitt 29 ein dritter Mittelwert bzw. ein dritter Querbeschleunigungsmittelwert a̅_{R2} und ein vierter Mittelwert bzw. ein vierter Querbeschleunigungsmittelwert a̅_{W2} sowie für den dritten Abschnitt 30 ein fünfter Mittelwert bzw. ein fünfter Querbeschleunigungsmittelwert a̅_{R3} und ein sechster Mittelwert bzw. ein sechster Querbeschleunigungsmittelwert a̅_{W3} gebildet.

Der erste Querbeschleunigungsmittelwert a̅_{R1}, der dritte Querbeschleunigungsmittelwert a̅_{R2} und der fünfte Querbeschleunigungsmittelwert a̅_{R3} werden aus Werten der ersten Querbeschleunigung a_{R}, der zweite Querbeschleunigungsmittelwert a̅_{W1}, der vierte Querbeschleunigungsmittelwert a̅_{W2} und der sechste Querbeschleunigungsmittelwert a̅_{W3} aus Werten der zweiten Querbeschleunigung a_{W} gebildet.

Aus den Querbeschleunigungsmittelwerten wird mittels einer Ausgleichungsrechnung der Neigungskoeffizient s des Wagenkastens 3 bestimmt. Die Ausgleichungsrechnung wird als aus dem Stand der Technik grundsätzlich bekannte, lineare Regression ausgeführt, wobei der erste Querbeschleunigungsmittelwert a̅_{R1}, der dritte Querbeschleunigungsmittelwert a̅_{R2} und der fünfte Querbeschleunigungsmittelwert a̅_{R3} als Prädiktoren fungieren. Der zweite Querbeschleunigungsmittelwert a̅_{W1}, der vierte Querbeschleunigungsmittelwert a̅_{W2} und der sechste Querbeschleunigungsmittelwert a̅_{W3} fungieren als Systemantwortgrößen.

Aus dem ersten Querbeschleunigungsmittelwert a̅_{R1} und dem zweiten Querbeschleunigungsmittelwert a̅_{W1} wird ein erstes Wertepaar, aus dem dritten Querbeschleunigungsmittelwert a̅_{R2} und dem vierten Querbeschleunigungsmittelwert a̅_{W2} ein zweites Wertepaar sowie aus dem fünften Querbeschleunigungsmittelwert a̅_{R3} und dem sechsten Querbeschleunigungsmittelwert a̅_{W3} ein drittes Wertepaar gebildet. Aus dem ersten Wertepaar, dem zweiten Wertepaar und dem dritten Wertepaar wird mittels Anwendung einer aus dem Stand der Technik bekannten Methode der kleinsten Quadrate, bei der Abweichungen (Residuen) des ersten Wertepaars, des zweiten Wertepaars und des dritten Wertepaars von einer zu bildenden Regressionsgeraden quadriert, die Quadrate summiert und die Summe minimiert werden, die Regressionsgerade gebildet bzw. deren Steigung bestimmt.

Die Regressionsgerade wird also aus Werten der ersten Beschleunigung als erste Dimension und Werten der zweiten Beschleunigung als zweite Dimension gebildet.

Die Steigung der Regressionsgeraden entspricht dem Neigungskoeffizienten s, d.h. einem Winkelkoeffizienten.

Der Winkelkoeffizient wird demnach als Steigung der Regressionsgeraden gebildet.

Ist der Neigungskoeffizient s größer als ein nominaler Winkelkoeffizient bzw. ein nominaler Neigungskoeffizient sₙₒₘ, so wird ein Schaden des Wanksystems oder ein Erreichen von Verschleißgrenzmaßen des Wanksystems angenommen und ein Warnereignis erzeugt (Warnereignis-Auslösung 32).

Dabei handelt es sich um eine günstige Lösung. Erfindungsgemäß ist es auch denkbar, dass das Warnereignis in einem Wartungsstand erzeugt wird.

Der nominale Neigungskoeffizient sₙₒₘ ist aus Auslegungsrechnungen und Konstruktionsunterlagen zu dem Schienenfahrzeug vordefiniert und in der Datenbank 27 abgelegt.

Über nicht dargestellte, aus dem Stand der Technik bekannte Einrichtungen zur Datenübertragung (Kabel und Funk) werden Ergebnisdaten der Neigungsbestimmung an den Wartungsstand übertragen und dort Warnhinweise angezeigt.

Bei den Ergebnisdaten handelt es sich um Daten bezüglich des Warnereignisses bzw. der Warnhinweise, die in dem Wartungsstand angezeigt werden. Erfindungsgemäß ist es auch vorstellbar, dass sich die Ergebnisdaten auf den Neigungskoeffizienten s beziehen, d.h. in dem Wartungsstand Auswertungen durchgeführt werden und das Warnereignis erzeugt wird.

Erfindungsgemäß ist es weiterhin auch denkbar, über ein Anzeigegerät in einem Führerstand des Schienenfahrzeugs entsprechende Warnhinweise anzuzeigen.

Erfindungsgemäß ist es z.B. auch vorstellbar, eine dreidimensionale Regression für eine Bestimmung von Neigungskoeffizienten s auszuführen. Beispielsweise kann dabei neben der ersten Querbeschleunigung a_{R} und der zweiten Querbeschleunigung a_{W}, welche eine erste und eine zweite Dimension der Regression ausbilden, als dritte Dimension auch eine Zuladung m eingesetzt werden.

Werte der Zuladung m werden dabei durch einen im Zusammenhang mit Fig. 1 beschriebenen Lastsensor kontinuierlich gemessen, aufgezeichnet und abschnittsweise in der Datenbank 27 gespeichert bzw. in der Recheneinheit verarbeitet.

Eine Regressionsgerade wird aus Werten der ersten Querbeschleunigung a_{R}, d.h. der ersten Beschleunigung, der zweiten Querbeschleunigung a_{W}, d.h. der zweiten Beschleunigung, und der Zuladung m angesetzt und der Neigungskoeffizient s, d.h. der Winkelkoeffizient, wird als Steigung dieser Regressionsgeraden gebildet. Durch ein Einsetzen der Zuladung m in die Ausgleichungsrechnung wird die Genauigkeit der Neigungsbestimmung weiter verbessert.

Weiterhin ist es möglich, dass aus dem Neigungskoeffizienten s auch ein Schaden der Sekundärfederung detektiert wird. Darüber hinaus ist es denkbar, dass als Methode der Ausgleichungsrechnung beispielsweise auch ein aus dem Stand der Technik bekannter Fit, d.h. eine Funktionsanpassung eingesetzt wird.

### Liste der Bezeichnungen

- 1: Fahrwerk
- 2: Fahrwerksrahmen
- 3: Wagenkasten
- 4: Radsatz
- 5: Erstes Rad
- 6: Zweites Rad
- 7: Erstes Radsatzlager
- 8: Zweites Radsatzlager
- 9: Erste Primärfeder
- 10: Zweite Primärfeder
- 11: Längsmitnahme
- 12: Erste Sekundärfeder
- 13: Zweite Sekundärfeder
- 14: Wankstütze
- 15: Torsionswelle
- 16: Erster Hebel
- 17: Zweiter Hebel
- 18: Erste Zug-Druck-Stange
- 19: Zweite Zug-Druck-Stange
- 20: Erstes Drehgelenk
- 21: Zweites Drehgelenk
- 22: Drittes Drehgelenk
- 23: Viertes Drehgelenk
- 24: Gleis
- 25: Erster Beschleunigungssensor
- 26: Zweiter Beschleunigungssensor
- 27: Datenbank
- 28: Erster Abschnitt
- 29: Zweiter Abschnitt
- 30: Dritter Abschnitt
- 31: Tiefpassfilterung
- 32: Warnereignis-Auslösung

- a_{R}: Erste Querbeschleunigung
- a_{W}: Zweite Querbeschleunigung
- m: Zuladung
- c_{T}: Steifigkeit
- a_{RS}: Querbeschleunigungs-Schwellwert
- a̅_{R1}: Erster Querbeschleunigungsmittelwert
- a̅_{W1}: Zweiter Querbeschleunigungsmittelwert
- a̅_{R2}: Dritter Querbeschleunigungsmittelwert
- a̅_{W2}: Vierter Querbeschleunigungsmittelwert
- a̅_{R3}: Fünfter Querbeschleunigungsmittelwert
- a̅_{W3}: Sechster Querbeschleunigungsmittelwert
- s: Neigungskoeffizient
- sₙₒₘ: Nominaler Neigungskoeffizient
- δ: Querneigungswinkel

## Patentansprüche

1. Verfahren zur betrieblichen Neigungsbestimmung bei Fahrzeugen, insbesondere bei Schienenfahrzeugen mit zumindest einem Fahrwerk (1) sowie mit zumindest einem Wagenkasten (3), wobei zumindest aus einer ersten Beschleunigung des Fahrzeugs sowie aus einer zweiten Beschleunigung des Fahrzeugs ein Winkelkoeffizient kontinuierlich ermittelt wird, wobei der ermittelte Winkelkoeffizient mit einem nominalen Winkelkoeffizienten kontinuierlich verglichen wird, und wobei Daten zumindest bezüglich der ersten Beschleunigung und der zweiten Beschleunigung dann aufgezeichnet werden, wenn die erste Beschleunigung einen definierten Beschleunigungs-Schwellwert überschreitet, **dadurch gekennzeichnet, dass** die aufgezeichneten Daten in Abhängigkeit von Auftrittsorten und Auftrittszeitpunkten zumindest der ersten Beschleunigung und der zweiten Beschleunigung zumindest einem ersten Abschnitt (28), wobei für diesen zumindest ersten Abschnitt (28) zumindest ein erster Mittelwert der ersten Beschleunigung und ein zweiter Mittelwert der zweiten Beschleunigung gebildet werden, zugeordnet werden.

2. Verfahren nach Anspruch 1, **dadurch gekennzeichnet, dass** als erste Beschleunigung des Fahrzeugs eine erste Querbeschleunigung (a_{R}) eines Fahrwerksrahmens (2) und als zweite Beschleunigung des Fahrzeugs eine zweite Querbeschleunigung (a_{W}) zumindest eines Wagenkastens (3) eingesetzt werden.

3. Verfahren nach Anspruch 1 oder 2, **dadurch gekennzeichnet, dass** als Winkelkoeffizient ein Neigungskoeffizient (s) und als nominaler Winkelkoeffizient ein nominaler Neigungskoeffizient (sₙₒₘ) eingesetzt werden.

4. Verfahren nach einem der Ansprüche 1 bis 3, **dadurch gekennzeichnet, dass** in die Ermittlung des Winkelkoeffizienten zumindest eine Zuladung (m) des Fahrzeugs eingesetzt wird.

5. Verfahren nach einem der Ansprüche 1 bis 4, **dadurch gekennzeichnet, dass** der Winkelkoeffizient mittels einer Ausgleichungsrechnung zumindest bezüglich der ersten Beschleunigung sowie der zweiten Beschleunigung bestimmt wird.

6. Verfahren nach Anspruch 5, **dadurch gekennzeichnet, dass** der Winkelkoeffizient mittels einer Regression zumindest bezüglich der ersten Beschleunigung sowie der zweiten Beschleunigung bestimmt wird.

7. Verfahren nach Anspruch 4 und nach Anspruch 5 oder 6, **dadurch gekennzeichnet, dass** in die Ausgleichungsrechnung die zumindest eine Zuladung (m) eingesetzt wird.

8. Verfahren nach einem der Ansprüche 1 bis 7, **dadurch gekennzeichnet, dass** erfasste Signale der ersten Beschleunigung und der zweiten Beschleunigung mittels eines Tiefpasses gefiltert werden.

9. Verfahren nach einem der Ansprüche 1 bis 8, **dadurch gekennzeichnet, dass** zumindest der erste Mittelwert und der zweite Mittelwert in einer Datenbank (27) gespeichert werden.

10. Verfahren nach Anspruch 9, **dadurch gekennzeichnet, dass** zumindest aus dem ersten Mittelwert sowie dem zweiten Mittelwert der Winkelkoeffizient gebildet wird.

11. Verfahren nach einem der Ansprüche 1 bis 10, **dadurch gekennzeichnet, dass** Ergebnisdaten an einen Wartungsstand geleitet werden.

12. Verfahren nach einem der Ansprüche 1 bis 11, **dadurch gekennzeichnet, dass** die Erfassung der ersten Beschleunigung und der zweiten Beschleunigung, die Ermittlung des Winkelkoeffizienten sowie der Vergleich des ermittelten Winkelkoeffizienten mit dem nominalen Winkelkoeffizienten in oder an einem Fahrzeug durchgeführt wird.

13. Vorrichtung, welche zur Durchführung eines Verfahrens nach einem der Ansprüche 1 bis 12 eingerichtet ist, wobei Mittel zur Erfassung zumindest der ersten Beschleunigung und der zweiten Beschleunigung, Mittel zur Ermittlung des Winkelkoeffizienten und zum Vergleich des ermittelten Winkelkoeffizienten mit einem nominalen Winkelkoeffizienten sowie Mittel zur Datenübertragung vorgesehen sind.

14. Vorrichtung nach Anspruch 13, **dadurch gekennzeichnet, dass** zumindest ein Lastsensor vorgesehen ist.

## Claims

1. Method for operational tilt determination in vehicles, in particular in rail vehicles with at least one chassis (1) as well as at least one vehicle body (3), wherein an angle coefficient is continuously ascertained at least from a first acceleration of the vehicle as well as from a second acceleration of the vehicle, wherein the ascertained angle coefficient is continuously compared with a nominal angle coefficient, and wherein data at least relating to the first acceleration and the second acceleration is then recorded if the first acceleration exceeds a defined acceleration threshold value, **characterised in that** the recorded data, as a function of occurrence locations and occurrence time points at least of the first acceleration and the second acceleration, are assigned at least to a first section (28), wherein at least a first average value of the first acceleration and one second average value of the second acceleration are formed for this at least first section (28).

2. Method according to claim 1, **characterised in that** a first lateral acceleration (a_{R}) of a chassis frame (2) is used as first acceleration of the vehicle and a second lateral acceleration (a_{W}) of at least one vehicle body (3) is used as second acceleration of the vehicle.

3. Method according to claim 1 or 2, **characterised in that** a tilt coefficient (s) is used as angle coefficient and a nominal tilt coefficient (sₙₒₘ) is used as nominal angle coefficient.

4. Method according to one of claims 1 to 3, **characterised in that** at least one payload (m) of the vehicle is used in the ascertaining of the angle coefficients.

5. Method according to one of claims 1 to 4, **characterised in that** the angle coefficient is determined by means of an adjustment calculation at least relating to the first acceleration as well as the second acceleration.

6. Method according to claim 5, **characterised in that** the angle coefficient is determined by means of a regression at least relating to the first acceleration as well as the second acceleration.

7. Method according to claim 4 and according to claim 5 or 6, **characterised in that** the at least one payload (m) is used in the adjustment calculation.

8. Method according to one of claims 1 to 7, **characterised in that** captured signals of the first acceleration and the second acceleration are filtered by means of a low-pass filter.

9. Method according to one of claims 1 to 8, **characterised in that** at least the first average value and the second average value are stored in a database (27).

10. Method according to claim 9, **characterised in that** the angle coefficient is formed at least from the first average value as well as the second average value.

11. Method according to one of claims 1 to 10, **characterised in that** result data is routed to a maintenance station.

12. Method according to one of claims 1 to 11, **characterised in that** the capturing of the first acceleration and the second acceleration, the ascertaining of the angle coefficients as well as the comparing of the ascertained angle coefficients with the nominal angle coefficients are performed in or on a vehicle.

13. Apparatus, which is configured to perform a method according to one of claims 1 to 12, wherein means for capturing at least the first acceleration and the second acceleration, means for ascertaining the angle coefficients and for comparing the ascertained angle coefficients with a nominal angle coefficient as well as means for data transfer are provided.

14. Apparatus according to claim 13, **characterised in that** at least one load sensor is provided.

## Revendications

1. Procédé de détermination d'une inclinaison de fonctionnement dans des véhicules, en particulier dans des véhicules ferroviaires comprenant au moins un châssis de roulement (1) ainsi qu'au moins une caisse de voiture (3), dans lequel un coefficient d'angle est déterminé en continu à partir d'au moins une première accélération du véhicule et d'une deuxième accélération du véhicule, dans lequel le coefficient d'angle déterminé est comparé en continu à un coefficient d'angle nominal, et dans lequel des données sont alors enregistrées au moins par rapport à la première accélération et à la deuxième accélération lorsque la première accélération dépasse une valeur seuil d'accélération définie, **caractérisé en ce que** les données enregistrées, en fonction de lieux de survenue et de temps de survenue d'au moins la première accélération et la deuxième accélération, sont attribuées à au moins un premier tronçon (28), dans lequel pour cet au moins premier tronçon (28), au moins une première valeur médiane de la première accélération et une deuxième valeur médiane de la deuxième accélération sont formées.

2. Procédé selon la revendication 1, **caractérisé en ce qu'**une première accélération transversale (a_{R}) d'un cadre du châssis (2) est utilisée en tant que première accélération du véhicule, et une deuxième accélération transversale (a_{w}) d'au moins une caisse de voiture (3) est utilisée en tant que deuxième accélération du véhicule.

3. Procédé selon la revendication 1 ou 2, **caractérisé en ce qu'**un coefficient d'inclinaison (s) est utilisé en tant que coefficient d'angle et qu'un coefficient d'inclinaison nominal (sₙₒₘ) est utilisé en tant que coefficient d'angle nominal.

4. Procédé selon l'une des revendications 1 à 3, **caractérisé en ce qu'**au moins un chargement (m) du véhicule est utilisé dans la détermination du coefficient d'angle.

5. Procédé selon l'une des revendications 1 à 4, **caractérisé en ce que** le coefficient d'angle est déterminé au moyen d'un calcul de compensation au moins par rapport à la première accélération ainsi qu'à la deuxième accélération.

6. Procédé selon la revendication 5, **caractérisé en ce que** le coefficient d'angle est déterminé au moyen d'une régression au moins par rapport à la première accélération et à la deuxième accélération.

7. Procédé selon la revendication 4 et selon la revendication 5 ou 6, **caractérisé en ce que** l'au moins un chargement (m) est utilisé dans le calcul de compensation.

8. Procédé selon l'une des revendications 1 à 7, **caractérisé en ce que** des signaux détectés de la première accélération et de la deuxième accélération sont filtrés au moyen d'un filtre passe-bas.

9. Procédé selon l'une des revendications 1 à 8, **caractérisé en ce qu'**au moins la première valeur médiane et la deuxième valeur médiane sont stockées dans une base de données (27) .

10. Procédé selon la revendication 9, **caractérisé en ce que** le coefficient d'angle est formé au moins à partir de la première valeur médiane et de la deuxième valeur médiane.

11. Procédé selon l'une des revendications 1 à 10, **caractérisé en ce que** des données de résultat sont envoyées à un banc de maintenance.

12. Procédé selon l'une des revendications 1 à 11, **caractérisé en ce que** la détection de la première accélération et de la deuxième accélération, la détermination du coefficient d'angle ainsi que la comparaison du coefficient d'angle déterminé au coefficient d'angle nominal est effectuée dans ou sur un véhicule.

13. Dispositif équipé pour la réalisation du procédé selon l'une des revendications 1 à 12, dans lequel des moyens sont prévus pour détecter au moins la première accélération et la deuxième accélération, des moyens sont prévus pour détecter le coefficient d'angle et pour comparer le coefficient d'angle déterminé à un coefficient d'angle nominal et que des moyens sont prévus pour transmettre les données.

14. Dispositif selon la revendication 13, **caractérisé en ce qu'**au moins un capteur de charge est prévu.
